# EUROPEAN PATENT APPLICATION

(11) **EP 1 501 212 A1**
(43) Date of publication of application: **26.01.2005**
(21) Application number: 02759057.9
(22) Date of filing: 02.09.2002
(51) Int. Cl.: H04B 7/165, H04B 7/24

(54) **MICROWAVE INTEGRATED TELEVISION RADIO AND INFORMATION SYSTEM (MITRIS-INT)**

(30) Priority: 12.04.2002 UA 02042956
(71) Applicant: Obshchestvo s ogranichennoi otvetstvennostyu "Institut Electroniki i Svyazi", Kiev 04210 (UA)
(72) Inventor: NARYTNIK, Teodor Nikolaevich, Kiev, 03170 (UA); VOITENKO, Alexandr Grigorievich, Kiev 03134 (UA); GOLOVKHA, Alexandr Ivanovich, Kiev, 04215 (UA); YEVDOKIMOV, Vladimir Vitalievich, Kiev, 04210 (UA); KAZIMIRENKO, Valeriy Yakovlevich, Kiev, 03170 (UA); KOZLOVSKY, Petr Leonidovich, Kievskaya obl., 07400 (UA); LYSENKO, Valeriy Alexandrovich, Kiev, 01054 (UA); NAGIEV, Tofik Khabibovich, 06700 Ankara (TR); ORLOV, Anatoliy Timofeyevich, Kiev, 03112 (UA); PONEDILKO, Viktor Ivanovich, Kiev, 02140 (UA); SAVASTIANOV, Vladimir Anatolievich, Kiev, 03049 (UA); FAINGOLD, Alexandr Mikhailovich, Kiev, 03049 (UA)
(74) Representative: Benatov, Emil Gabriel, Dr.
(86) International application number: PCT/UA2002/000038
(87) International publication number: WO 2003/088523

(57) **Abstract**

The inventive microwave integrated television radio and information system (MITRIS-INT) comprises a central station (1) provided at least with one transmitting-receiving channel and a plurality of user stations (10), each of them being provided with an aerial (14) which is connected to a transmitter (upconverter) (16) and a receiving path (downconverter) (12) by means of a duplexer (13). In addition, the central station (1) comprises the head-end receiving station (5) of a return channel and a computer (9) which is connected to the access node server in an information system (for example, the Internet). Each user station (10) also comprises the demodulator (11) of a direct channel and a plurality of transmitting terminal stations (15), each of them being provided with the modulator (17), the transmitter (16) of the return channel and a computer (18).

## Description

### Field of the invention

The mentioned invention is related to the communication technology that provides for transmitting and receiving information through radio connection channels, particularly, to the microwave integrated television radio and information system.

### Background of the invention

At present, an interest to the Internet as an international computer network, which is a channel of receiving information, is constantly growing. All existing Internet-access systems, the technologies of which are supplementing each other, form an extensive and multispeed network. At the same time, old narrow-band technologies, which utilize telephone network of general use, in increasing frequency are giving way to new systems, including microwave systems, based on microwave integral TV and radio information systems (further the "MITRIS").

The significant size of the MITRIS service areas allows to provide service for spatially remote users in a radius above 50 to 60 km. Fundamental advantages of the MITRIS, compared with other Internet-excess systems are the following:
- high speed of system development;
- large coverage of users with minimal inputs for communications;
- possibility for a subscriber to receive data stream with the speeds of 68 Mbite/sec in the straight and 2Mbite/sec in the backward channels and even higher;
- integration simplicity on the radio channels by means of wireless communication, both ground-based and satellite;
- large informational capacity;
- possibility of gradual increase in subscribers' quantity (T.M. Narytnik, V.P. Babak, M.S. Ilchenko, S.O. Kravchuk. Microwave technologies in the television communication systems, Kiev, "Technics", 2000, page167).

From a technical point of view the microwave integral television radio and information system MITRIS-K is the closest to the suggested technical solution (the patent application of Ukraine # 2000116841, submitted on November 30, 2000, entitled "Microwave integrated television radio and information system MITRIS-K"), which secures transmitting and receiving of information through the radio communication channels. The known MITRIS-K system consists of a head-end and, at least, one subscriber station, wherein the head-end station contains at least one transmitting-receiving bole that includes a transmitter as a cycloinverter, the input of which is connected through an adder to the radio-frequency output of a modem, and the output is connected to the output of an aerial through a duplexer, and the receiving section as a cycloconverter, the input of which connected to the aerial through the duplexer, while the output is connected to the modem input, and the subscriber station contains a reflector-type aerial, which is connected to the block of a frequency partition, which is connected with the transmitter and the receiving section through the duplexer.

The configuration of this known system solves the problem of the channel accordance in compliance with the PDH standard (plesiochronic data hierarchy) and also with the SDH standard (synchronic data hierarchy). In the subscribed configuration the duplex channels are given. They support a range of communicational services.

The main disadvantage of the known MITRIS-K system is the insufficiently effective use of its technical abilities during its use there is no access to the dispersed data base, information and communicational networks and systems (to the Internet resources, for example, etc.) and their bringing to the users at large. Such inefficiency is mostly a result of ineffective use of resource carrying capacity of the produced communication channels, in particular the backward channels. On account of data services access dissymmetry the backward channel demands a significantly smaller carrying capacity value, than the forward channel. It can be effectively used on when the forward and the backward channels are fully loaded.

Thus, in order to achieve effective use of the created channels' carrying capacity, organization of dissymmetric channels is needed (for example, in the Internet the correlation of the descending (from the information services to the subscriber) and the ascending (from the subscriber to the information services) channels' carrying capacities reach 10...50), and also organization of an effective access to the channel resource (this is time granularity multi access (TDMA) of subscribers channels).

Another shortcoming of the given system is the high cost of equipment, which depends on the carrying capacity, set of services, etc.

### Summary of the invention

The object of the present invention is to provide a network of descending and ascending communication channels, based on the known MITRIS-K system, which enables users' effective and cheap access to informational resources without any other connection means. That is, to provide the necessary information to the subscriber's request, to provide support of transport-level connection in using Internet-technologies, and a high-quality access to the Internet-services. Achievement of this object is very important especially in cases when communicational infrastructure is less-developed (for example, linking-up the subscribers from a rural area to the Internet, where the number of telephone channels is very small and their quality is extremely low, and the connection with the provider is to be maintained by means of a long-distance network that substantially increases the cost of this service).

This object is achieved by means of the microwave integrate television radio and information system, which consists of a central and, at least one subscriber station, moreover, the head-end station contains, at least, one transmitting-receiving bole, that includes a transmitter (cycloinverter), an input of which is connected to the aerial through a duplexer; and consists, also, of a receiving path (cycloconverter), an input of which is connected to the aerial through the duplexer, and the output is connected to a division block, and the subscriber station contains an aerial, which is connected with a transmitter (cycloinverter) through the duplexer and a receiving path (cycloconverter); according to the invention, the central station contains, additionally, a leading receiving station of the backward channel, that contains cycloconverter of the backward channel, the output of which is connected to an input of the division block, then, demodulators of the backward channel connected to the outputs of the division block, and the computer, demodulators of the backward channel are connected to, and the subscriber station contains additionally a demodulator of the forward channel, the input of which is connected with the cycloconverter of the subscriber station forward channel. At least one receiving terminal station is provided , that consists of a backward channel modulator and a backward channel cycloinverter, an input of which is connected with the backward channel modulator, and the computer, to which the backward channel modulator and the forward channel demodulator are connected.

As compared to the known MITRIS-K system the currently proposed MITRIS-INT system includes an additional introduction of a head -receiving station into the head-end station, which includes a cycloconverter, an input of which is connected to an input of the division block, outputs of which are connected with demodulators of the backward channel, and a computer, to which the backward channel demodulators are connected, and also, additional introduction, to the subscriber station structure, of a forward channel demodulator, the input of which is connected to the cycloconverter output, at least of one receiving terminal station, that contains a backward channel modulator and a cycloinverter, an input of which is connected to the backward channel modulator, and a computer, to which a backward channel modulator and a forward channel demodulator are connected.

The backward channel modulator of the receiving terminal station contains parts functioning as buffer, digital interface, scrambler and coder of the data stream, carrier modulator.

The backward channel demodulator of the head-receiving station functions as a signal receiver from a receiving terminal station, namely: the block-forming of a Nikewist-channel, carrier modulator decoder and scrambler of a data flow, interface to the computer, forming block of necessary buffers for temporal storage of received data.

The head-end station computer executes routing to a port, which is connected through a communication channel with a source (provider) of information (services). The terminal stations work in an asynchronous mode, in other words they can support a SCPC regime (single channel per one carrier) with the resource division FDMA (frequency division multiple access). In addition, the adopted technical decisions enable them to fulfill a TDMA regime (time-division multiple access). This, in its turn, decreases the service cost, at the expense of increase of the spectral system effectiveness. In this case, an insignificant resource part of a descending (forward) channel is used for the control of the terminal station. The introduction of a corrective message to the general descending channel is executed at an information network node access, which, generally, is not included in the structure of the MITRIS-INT system and on which it is routed into a terminal network for users of information and communication services.

The number of the terminal stations in a network and the information speed, which is given to one terminal station, are defined by a signal format (in the case of the TDMA regime) or used by a frequency range (in the case of the FDMA regime).

A data stream is radiated into a service area in the DVB-S standard (digital video broadcasting satellite) and received by the subscribers' stations, which are equipped with the DVB stream receiving paths, with a speed above 100 Mbite/sec with the development of the data addressed to a user with a speed of 6-8 Mbite/sec, if the DVB-card is used as a DVB signal receiver.

At the same time, the cost of the transmitting and receiving equipment of the MITRIS-INT system is significantly lower than that of the known MITRIS-K system.

The cost of the transmitting and receiving equipment of the head-end station forms a close value and depends on the number of receiving boards, i.e. on the number of subscribers.

Thus, the presently proposed new structural decision of the invention based on the MITRIS-K system enables widening of its functions as a transmitting-receiving system, which provides a cheap information service due to the reduction of subscriber equipment prices, i.e. the invention provides, on the basis of the MITRIS-K system, services for providing users with access to data and communication Internet services.

### Brief description of the drawings

A more detailed description of the invention is given herein below by means of an example of a preferred embodiment with reference to the enclosed drawings, where:
Fig. 1 is a structural diagram of the microwave integrated television radio information system MITRIS-INT according to the invention;
Fig. 2 is a circuit (network) layout, which consists of a head-end station and a terminal station according to the invention;
Fig 3 is a schematic view of the data stream in the system according to the invention.

### Preferred embodiment for carrying out the invention

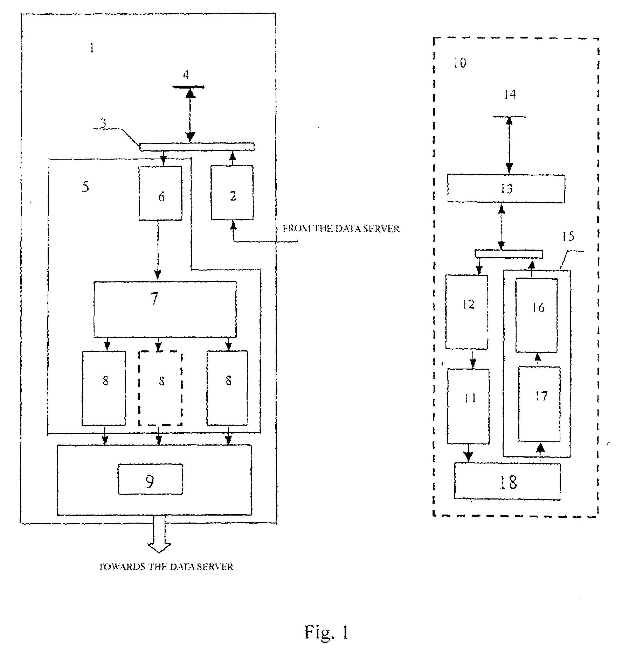

As it is shown on fig. **1**, the microwave integrated TV-radio and information system MITRIS-INT consists of a head-end station **1,** which contains a transmitter, made in the form of a cycloinverter **2**, the output of which is connected through a duplexer **3** to an aerial **4**, a backward channel head receiving station **5** compris ing a receiving path, made in the form of a cycloconverter **6** of the backward channel, the input of which is connected through the duplexer **3** to the aerial **4**, and the output is connected to the input of a separation block **7**, the outputs of which are connected to demodulators **8** of the backward channel, and a computer **9** of the head-end station **1**, to which the demodulators **8** of the backward channel are connected, and a plurality of subscriber stations **10**, each of which contains a demodulator **11** of the forward channel, the input of which is connected with the output of a cycloconverter **12** of the forward channel, the input of which is connected through a duplexer **13** to an aerial **14.** There is also a plurality of transmitting terminal stations **15,** each of which contains a cycloinverter **16** of the backward channel, the output of which is connected through the duplexer **13** to the aerial **14**, and the input is connected to a modulator **17** of the backward channel, and a computer **18** of the subscriber station **10**, connected to the demodulator output **11** of the forward channel and the demodulator input **17** of the backward channel.

### The proposed system MITRIS-INT works in the following way:

Data stream proceeds through the interface of the PCI (Peripheral Component Interconnect) computer **18** of the subscriber to the modulator input **17** of the backward channel of the transmitting terminal station **15** and further to the input of the cycloinverter **16** of the backward channel. After scrambling, antinoise stream coding, modulation and processing (filtration, amplification, carrier frequency and power conversion) the signal from the cycloinverter **16** output of the backward channel, through the duplexer **13** and the aerial **14**, and over the radio channel proceeds, through the aerial **4** and duplexer **3**, to the cycloconverter **6** of the backward channel of the head receiving station **5** of the backward channel of the head-end station **1.** The separation block **7** converts the signal frequency into demodulation frequency, singles out the radio frequency channels and directs them to separate ports, to which the demodulators **8** of the backward channel are connected. The bit-transfer rate (digital stream) in the demodulators **8** of the backward channel is restored, the timeliness of the signal arrival from the transmitting terminal station **15** is calculated, a corrective message is generated, whereupon the request stream along with the corrective message is routed onto the provider's server. In the server, the corrective message is brought into the common data stream of the network level (IP-packages). The average corrective message speed reaches a value corresponding to several kilobits per second, whereas the speed in the descending (forward) channel may reach tens of megabits per second.

Thus, the use of 0,1...0,01 % of the descending (forward) data channel in order to adjust the stream does not actually influence the data quality and does not make the price of the service higher, both at the expense of the service channel cost and the additional equipment, since the reception is carried out by means used in the existing descending (forward) channel. The package division for different purposes is executed on the computer **18** of the subscriber station **10** by means of the corresponding addressing with the use of basic facilities.

Data stream in the form of radio signals is directed towards the transmitter (cycloinverter) **2** of the head-end station **1** and then it is radiated into the system service area by the transmitter **2** of the head-end station **1** of the forward channel, the output of which is connected through the duplexer **3** to the aerial **4**, and the input is connected to the communication channel, which connects it with the information server port and along which the data stream arrives at the head-end station **1** from the provider's server. The aerial **4** radiates the IP-packages into the service area in the DVB-S format (Digital Video Broadcasting - Satellite), which are then received by the subscriber stations **10**, equipped with the receiving cards of the DVB (Digital Video Broadcasting) -stream with the speed of up to 8 Mbit per second. The packages received by the aerial **14** by each of the subscriber stations **10**, through the duplexer **13**, arrive at the cycloconverter **12** of the forward channel and further to the demodulator **11** of the forward channel. In the demodulator **11** of the forward channel the bit-transfer rate (digital stream) of the forward channel is restored and delivered onto the computer **18** of the subscriber station **10**, where it is divided into a corrective and data stream. The data stream is used for displaying the received data on the screen of the computer **18**, and the corrective stream is used for correcting the time of the cycle start (time slot).

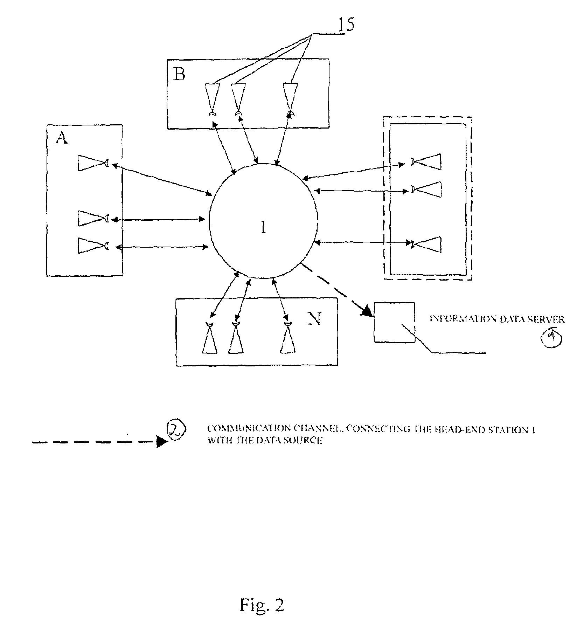

The network organization diagram is shown on fig. 2. The transmitting terminal stations **15** of A, B,..., N groups have an access to the resource part chosen for the given group of the transmitting terminal stations. The group number corre sponds to the number of the demodulators **8** of the backward channel of the head receiving station **5** of the head-end station **1.** The chosen frequency resource of the backward channel is allocated among the transmitting terminal stations of one group applying the TDMA (time-division multiple access) technologies.

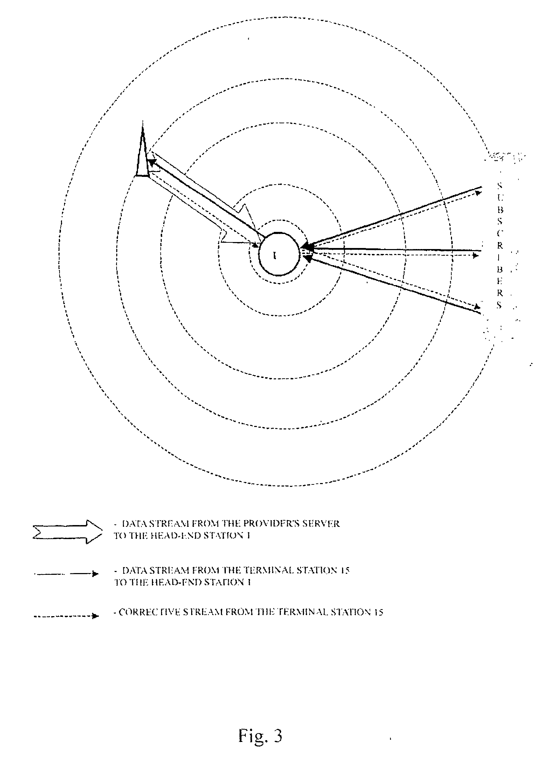

On fig. 3 data streams in the proposed system are displayed. The arrows show the following data streams:
- the stream from the service information server (this channel may also be organized by the means of the MITRIS-INT system if the server is located in the service area of the head-end station 1 of the MITRIS-INT system);
- the backward channel stream from the transmitting terminal stations 15 to the head-end station 1;
- the corrective stream within the bounds of forward channel to the transmitting terminal stations 15;
- the stream of the forward channel provided to the subscribers in the head-end station 1 service area. This channel is given in the DVB (Digital Video Broadcasting) format.

The service area of the head-end station 1 of the MITRIS-INT system is marked with concentric circles.

The use of the DVB-S standard in the forward channel with the encapsulation of the network level packages allows a most effective use of the channel capacity without any additional readjustments of the channel-forming equipment or filling the stream with non-informational symbols.

The pilot model of the MITRIS-INT system, developed by the authors, has the following characteristics:
- access method to the allocation resource - TDMA;
- data speed per one transmitting terminal station - 20 Kbit/s
- the number of the transmitting terminal stations in channel 2 Mbit/s - 64 (with the mentioned data speed per one transmitting terminal station);
- data speed in channel - 1300 Kbit/s (all the data speed may be provided either to the 64 transmitting terminal stations with 20 Kbit/s to each, or to a smaller number of transmitting terminal stations, with an appropriate increase of data speed to various transmitting terminal stations);
- noise-immunity of the channel - BER (Bit Error Rate) = 10⁻⁶ with the correlation of s/n (speed/noise) = 7 decibel.

Hence the proposed MITRIS-INT system enables an optimal and most effective use of the carrying capacity of the created communication channels, especially backward channels, and also an essential decrease in the cost of equipment, primarily the subscriber's equipment. It is mainly due to the fact that the forward and backward channels may operate on various protocols, a delay in channels does not affect the cycle synchronization, a separate synchronization channel is absent, and also the network level stream is used.

It should be understood that the invention is described by means of a particular embodiment, which does not limit the invention in any way, and the persons skilled in the art can make various modifications and alterations to the invention, which do not step out of the scope of the invention defined in the attached claims.

For example, both the transmit-receive aerial (described in the above embodiment of the invention) and various other aerials - receiving and transmitting, can be used for the data transceiving. Besides, different types of aerials may be used, e.g. a transmit-receive aerial with a circular pattern and so on. Moreover, a computer may be used to serve as an access server, and in order to enhance the efficiency of the subscriber's computer a server-gateway may be used.

### Industrial applicability of the invention

The presented invention may be used as a means for data acquisition from various kinds of transmitters, for remote control of objects, etc., for example, when providing access to the information systems and networks, when monitoring the environment, in video-monitoring, or in intrusion alarm systems and etc.

## Claims

1. Integrated TV-radioinformational system MITRIS-INT comprising a head-end station (1) and at least one subscriber's station (10), wherein the head-end station (1) contains a transmitter in the form of a cycloinverter (2), whose output is connected to an aerial (4) through a duplexer (3), and a receiving path in the form of a cycloconverter (6), whose input is connected to the aerial (4) through the duplexer (3), and the output is connected to a separation block (7), and the subscribers' station (10) contains an aerial (14) connected to the transmitter through the duplexer (13), the transmitter formed as a cycloinverter (16), and a receiving path in the form of a cycloconverter (12) ***characterized in that*** the head-end station (1) also comprises a head receiving station (5) of the backward channel, the output of which is connected to the separation block (7) input, demodulators (8) of the backward channel, connected to the separation block (7) outputs, and a computer (9), to which the backward channel demodulators (8) are connected, and **in that** the subscriber's station (10) additionally contains a forward channel demodulator (11), the input of which is connected to the input of the cycloconverter (12) of the subscriber's station (10) forward channel, at least one transmitting terminal station (15), containing a modulator (17) of the backward channel and the cycloinverter (16) of the backward channel, the input of which is connected with the modulator (17) of the backward channel, and a computer (18), to which the backward channel modulator (17) and the forward channel demodulator (11) are connected.

2. The system according to claim 1 ***characterized in that*** the separation block (7) of the head receiving station (5) has from 1 to N outputs.

3. The system according to claims 1 or 2 ***characterized in that*** the input of the cycloinverter (2) of the head-end station (1) is connected to the communication channel connecting it to the information network site server port.

4. The system according to claims 1-3 ***characterized in that*** computer (9) of the head-end station (1) is connected to the information network access site server.

5. The system according to any of claims 1 -4 ***characterized in that*** the number of the demodulators (8) of the head receiving station (5) backward channel is determined by the quantity of the backward channel networks, each of which occupies one frequency.
